# EUROPÄISCHE PATENTSCHRIFT

(11) **EP 4 161 662 B1**
(45) Veröffentlichungstag und Bekanntmachung des Hinweises auf die Patenterteilung: **10.07.2024**
(21) Anmeldenummer: 22704492.2
(22) Anmeldetag: 26.01.2022
(51) Int. Cl.: A62C 99/00, A62C 3/07, A62C 3/16, G09B 9/00

(54) **BRANDÜBUNGSANLAGE, WELCHE DEN BRAND EINES ELEKTROFAHRZEUGS NACHBILDET**
FIRE-EXTINGUISHING TRAINING DEVICE, WHICH SIMULATES THE FIRE OF AN ELECTRIC VEHICLE
INSTALLATION D'ENTRAÎNEMENT AU FEU SIMULANT UN VÉHICULE ÉLECTRIQUE PRENANT FEU

(30) Priorität: 03.02.2021 DE 102021102467
(43) Veröffentlichungstag der Anmeldung: 12.04.2023
(73) Patentinhaber: Dräger Safety AG & Co. KGaA, 23560 Lübeck (DE)
(72) Erfinder: JOESTER, Carsten, 23558 Lübeck (DE); SOHNREY, Johannes, 23558 Lübeck (DE)
(74) Vertreter: Meyer-Gramann, Klaus Dieter
(86) Internationale Anmeldenummer: PCT/DE2022/100066
(87) Internationale Veröffentlichungsnummer: WO 2022/167037

(56) Entgegenhaltungen:
- US-B1- 10 573 195
- NADERER BRANDSIMULATION: "Clipsammlung Brandsimulation", 16 May 2011 (2011-05-16), XP055913129, Retrieved from the Internet <URL:https://www.youtube.com/watch?v=PsSRGeOwX5k>
- NADERER BRANDSIMULATION: "Clipsammlung Brandsimulation", 16 May 2011 (2011-05-16), XP055913129, Retrieved from the Internet <URL:https://www.youtube.com/watch?v=PsSRGeOwX5k> [retrieved on 20220414]

## Beschreibung

Die Erfindung betrifft eine Brandübungsanlage, welche den Brand eines Elektrofahrzeugs nachbildet. An dieser Brandübungsanlage können Feuerwehrleute trainieren, wie man den Brand eines Elektrofahrzeugs löscht. Ein solcher Brand kann insbesondere auf einer öffentlichen Straße, in einer Garage, an Bord eines Transportfahrzeugs für Elektrofahrzeuge oder auch in einer Fabrik für Elektrofahrzeuge auftreten.

Anmerkung: Der Begriff "Brandübungsanlage" bezeichnet im Folgenden einen physikalischen Gegenstand und nicht ein Simulationsprogramm, das auf einem Rechner abläuft.

Brandübungsanlagen für verschiedene Anwendungen sind z.B. aus US 10573195 B1, DE 102 08 980 A1, DE 10 2004 058 190 A1, DE 10 2006 020 944 B3, DE 10 2014 016 311 A1, DE 10 2014 016 310 A1 und DE 10 2017 008 009 B3 bekannt.

Die deutsche Norm DIN 14097 spezifiziert Anforderungen an eine Feuerwehr-Übungsanlage. DIN 14093 legt Anforderungen an eine Atemschutz-Übungsanlage fest.

Der Erfindung liegt die Aufgabe zugrunde, eine Brandübungsanlage bereitzustellen, welche eine in der Realität häufiger vorkommende Situation beim Brand eines Fahrzeugs realitätsnah nachbildet.

Die Erfindung wird durch eine Brandübungsanlage mit den Merkmalen des Anspruchs 1 gelöst. Vorteilhafte Ausgestaltungen sind in den Unteransprüchen angegeben.

Die erfindungsgemäße Brandübungsanlage umfasst eine Attrappe eines Fahrzeugs. Das Fahrzeug ist bevorzugt ein Landfahrzeug, besonders bevorzugt ein Straßenfahrzeug mit vier oder zwei Rädern, und zwar ein Personenfahrzeug oder ein Nutzfahrzeug, oder ein Schienenfahrzeug oder ein landwirtschaftliches Fahrzeug. Diese Fahrzeug-Attrappe umfasst mindestens eine Attrappe eines Akkumulators und mindestens eine Attrappe eines Reifens eines realen Fahrzeugs. Unter "dem Fahrzeug" wird ein reales Fahrzeug verstanden, das in Brand geraten kann. Unter einer "Attrappe" eines (realen) Fahrzeugs oder (realen) Fahrzeug-Bestandteils oder sonstigen Objekts wird ein physikalischer Gegenstand (Mock-Up) verstanden, der die äußeren Abmessungen dieses Fahrzeugs oder Fahrzeug-Bestandteils oder sonstigen Objekts aufweist. Unter einem "Akkumulator" wird eine wiederaufladbare Versorgungseinheit für elektrische Spannung, insbesondere eine Batterie, verstanden. Die Attrappen für die Fahrzeug-Bestandteile sind in der Fahrzeug-Attrappe an denjenigen Positionen angeordnet, an denen die Fahrzeug-Bestandteile üblicherweise in dem von der Fahrzeug-Attrappe nachgebildeten realen Fahrzeug angeordnet sind oder wenigstens angeordnet sein können.

Die oder jede Akkumulator-Attrappe umfasst jeweils einen Nebel-Erzeuger und einen Flammen-Erzeuger. Der Nebel-Erzeuger einer Akkumulator-Attrappe vermag Nebel zu erzeugen, wobei der erzeugte Nebel aus der Akkumulator-Attrappe austritt. Der Flammen-Erzeuger einer Akkumulator-Attrappe vermag Flammen zu erzeugen, wobei die erzeugten Flammen aus der Akkumulator-Attrappe austreten.

Die oder jede Reifen-Attrappe umfasst jeweils einen Flammen-Erzeuger. Der Flammen-Erzeuger einer Reifen-Attrappe vermag Flammen zu erzeugen, wobei die erzeugten Flammen aus der Reifen-Attrappe austreten.

Im Straßenverkehr sind immer mehr Elektrofahrzeuge, insbesondere Personenkraftwagen und Zweiräder, aber auch Nutzfahrzeuge und Busse unterwegs, welche ausschließlich oder wenigstens auf Teilstrecken von jeweils einem Elektromotor angetrieben werden. Der Elektromotor wird von mindestens einem wiederaufladbaren Akkumulator an Bord des Fahrzeugs mit elektrischer Energie versorgt, sodass keine stationäre Stromversorgung in Form einer Oberleitung oder einer Stromschiene erforderlich ist. Möglich ist, dass ein solches Straßenfahrzeug zusätzlich zum Elektromotor einen Verbrennungsmotor umfasst. Diese Elektrofahrzeuge müssen produziert und zu jeweils einer Abnahmestelle transportiert werden. Fahrzeuge mit Elektroantrieb werden zunehmend auch für landwirtschaftliche Anwendungen oder sonstige Anwendungen außerhalb des Straßenverkehrs verwendet.

Ein Elektromotor eines Elektrofahrzeugs nimmt elektrischen Strom mit einer Spannung von mehreren 100 V auf. Es ist möglich, dass ein Elektromotor oder ein Akkumulator an Bord eines Fahrzeugs in Brand gerät, beispielsweise während einer Fahrt oder während der Akkumulator aufgeladen wird. Um einen solchen Brand zu löschen, ist in vielen Fällen ein anderes Vorgehen erforderlich als bei einem Brand eines Fahrzeugs mit einem Verbrennungsmotor als einzigem Antrieb.

Die erfindungsgemäße Brandübungsanlage bildet im Betrieb den Brand eines Straßenfahrzeugs oder sonstigen Fahrzeugs realitätsnah nach, wobei an Bord des realen Fahrzeugs ein Elektromotor und mindestens ein Akkumulator zur Versorgung des Elektromotors angeordnet sind. Die Brandübungsanlage erzeugt hierbei unterschiedliche Situationen, die beim Brand eines solchen realen Fahrzeugs mit Elektromotor und Akkumulator auftreten können.

Wenn ein Akkumulator an Bord eines Fahrzeugs sich erhitzt und in Brand gerät, so wird häufig eine Kettenreaktion von unterschiedlichen Ereignissen ausgelöst. Die erfindungsgemäße Brandübungsanlage bildet mehrere mögliche Kettenreaktionen nach.

Die erfindungsgemäße Brandübungsanlage trägt dazu bei, Feuerwehrleute und andere Rettungskräfte realitätsnah darin zu trainieren, die richtigen Maßnahmen beim Brand eines Elektrofahrzeugs durchzuführen. Dank dieses Trainings können insbesondere häufiger alle Insassen eines brennenden Elektrofahrzeugs rascher gerettet werden, und eine Gefährdung von Menschen außerhalb des brennenden Elektrofahrzeugs tritt seltener auf.

Dank der erfindungsgemäßen Brandübungsanlage ist es seltener erforderlich, ein brennendes reales Elektrofahrzeug komplett in einer Wanne mit Wasser oder mit einer anderen löschenden Flüssigkeit zu versenken, um den Brand zu löschen, was sehr aufwendig ist.

Wenn ein Akkumulator eines realen Elektrofahrzeugs in Brand gerät, so stößt häufig der Akkumulator sowohl Nebel als auch Flammen aus. Um diese Ereignisse realitätsnah nachzubilden, umfasst die oder jede Akkumulator-Attrappe jeweils einen Nebel-Erzeuger und einen Flammen-Erzeuger. Bevorzugt lassen sich diese beiden Erzeuger unabhängig voneinander aktivieren, um wahlweise einen ausgewählten von mehreren möglichen zeitlichen Abläufen nachbilden zu können. Insbesondere lässt sich die Situation nachbilden, dass ein realer Akkumulator zuerst Nebel und dann Flammen ausstößt.

Bevorzugt umfasst die Fahrzeug-Attrappe eine Karosserie, welche die äußeren Abmessungen der Karosserie eines realen Fahrzeugs umfasst. Die oder jede Akkumulator-Attrappe befindet sich im Inneren dieser Karosserie der Fahrzeug-Attrappe. Die oder jede Reifen-Attrappe ist an dieser Karosserie befestigt, bevorzugt drehbar befestigt. Besonders bevorzugt lässt die Fahrzeug-Attrappe sich über einen Untergrund bewegen.

In einer Ausgestaltung ist an Bord der Fahrzeug-Attrappe eine Elektromotor-Attrappe angeordnet. Auch diese Elektromotor-Attrappe umfasst einen Nebel-Erzeuger und bevorzugt einen Flammen-Erzeuger, wobei der vom Nebel-Erzeuger erzeugte Nebel und die vom optionalen Flammen-Erzeuger erzeugte Flammen aus der Elektromotor-Attrappe austreten.

Ein reales Fahrzeug umfasst mindestens einen Sitz und / oder mindestens eine Sitzbank für jeweils mindestens einen Fahrzeuginsassen. Bevorzugt umfasst die Fahrzeug-Attrappe die Attrappe eines solchen Sitzes und / oder einer solchen Sitzbank. Die oder mindestens eine Akkumulator-Attrappe ist unterhalb dieses Sitzes oder dieser Sitzbank angeordnet. Diese Ausgestaltung bildet eine Gegebenheit beim Brand eines realen Elektrofahrzeugs mit einem Akkumulator unter einem Sitz oder einer Sitzbank besonders realistisch nach. Der Sitzes oder dieser Sitzbank in der Fahrzeug-Attrappe können den Zugang zu der Akkumulator-Attrappe in realitätsnaher Weise erschweren.

Bevorzugt umfasst die Fahrzeug-Attrappe zusätzlich eine Lenkrad-Attrappe. Diese Lenkrad-Attrappe bildet die Randbedingung nach, dass das reale Lenkrad an Bord eines brennenden Fahrzeugs den Zugang zu Personen oder Gegenständen im Inneren des Fahrzeugs erschweren kann. Die Lenkrad-Attrappe ist so an Bord der Fahrzeug-Attrappe positioniert wie ein Lenkrad an Bord eines realen Fahrzeugs. In einer Ausgestaltung lässt sich das Lenkrad wahlweise links oder rechts montieren, sodass die Fahrzeug-Attrappe wahlweise ein linksgesteuertes oder ein rechtsgesteuertes Fahrzeug nachbildet.

Möglich ist, dass ein reales Fahrzeug sowohl einen Elektromotor als auch einen Verbrennungsmotor umfasst. Ein derartiges Fahrzeug wird auch als HybridFahrzeug bezeichnet. Der Elektromotor wird von einem Akkumulator mit elektrischer Energie versorgt, der Verbrennungsmotor aus einem Kraftstofftank mit brennbarem Kraftstoff. In einer Ausgestaltung vermag die erfindungsgemäße Brandübungsanlage einen Brand an Bord eines solchen Hybrid-Fahrzeugs nachzubilden. Gemäß dieser Ausgestaltung umfasst die Fahrzeug-Attrappe zusätzlich einen Tank für eine brennbare Flüssigkeit, insbesondere einen Tank für brennbaren Kraftstoff. Ein Verschluss vermag diesen Tank der Fahrzeug-Attrappe wahlweise zu verschließen oder freizugeben. Diese Ausgestaltung ermöglicht es, wahlweise die Situation nachzubilden,
- dass zunächst der Kraftstofftank in Brand gerät und als Folge hiervon der Akkumulator erhitzt wird und ebenfalls in Brand gerät, als auch,
- dass zunächst der Akkumulator in Brand gerät und dann der Kraftstofftank.

Falls der Verschluss den Tank freigibt, so kann Sauerstoff zu der brennbaren Flüssigkeit im Tank gelangen. Falls der Verschluss den Tank verschließt, so ist der Tank gegen die Umgebung abgesperrt.

In einer Ausgestaltung lässt sich sowohl die Situation nachbilden, dass der Kraftstofftank mit aufgesetztem Verschluss in Brand gerät, als auch die Situation, dass der offene Kraftstofftank in Brand gerät, wobei Sauerstoff aus der Umgebung den Kraftstofftank erreichen kann.

Beim Brand eines realen Elektrofahrzeugs können Bestandteile des Fahrzeugs in unterschiedlicher Reihenfolge Nebel und / oder Flammen ausstoßen. Um unterschiedliche Situationen bei einem Einsatz der Brandübungsanlage nachbilden zu können, umfasst die Brandübungsanlage bevorzugt ein signalverarbeitendes Steuergerät. Dieses Steuergerät vermag die oder mindestens eine, bevorzugt jede Akkumulator-Attrappe der Brandübungsanlage anzusteuern. Bevorzugt führt das Steuergerät beim Ansteuern einen vorab vorgegebenen Ablauf durch, wobei dieser Ablauf festlegt, welche Akkumulator-Attrappen aktiviert werden und dann Nebel und Flammen ausstoßen und in welcher Reihenfolge welche aktivierten Akkumulator-Attrappen auf welche Weise angesteuert werden. Bevorzugt vermag das Steuergerät Benutzereingaben zu erfassen und zu verarbeiten. Ein Benutzer kann dadurch unterschiedliche Abläufe vorgeben, insbesondere unterschiedliche zeitliche Reihenfolgen, in der die Flammen-Erzeuger und / oder die Nebel-Erzeuger aktiviert werden.

In einer bevorzugten Ausgestaltung vermag das Steuergerät die oder mindestens eine Akkumulator-Attrappe, bevorzugt jede Akkumulator-Attrappe, so anzusteuern, dass folgendes bewirkt wird: Zunächst wird der Nebel-Erzeuger der Akkumulator-Attrappe aktiviert und beginnt, Nebel ausstoßen, der aus der Akkumulator-Attrappe austritt. Anschließend wird der Flammen-Erzeuger der Akkumulator-Attrappe aktiviert und beginnt, Flammen ausstoßen, die aus der Akkumulator-Attrappe austreten. Möglich ist, dass während einer Zeitspanne die Akkumulator-Attrappe sowohl Nebel als auch Flammen ausstößt. Diese Abfolge bildet den Brand eines Akkumulators realitätsnäher nach als andere mögliche Abfolgen. Denn wenn ein realer Akkumulator in Brand gerät, so tritt häufig zunächst Nebel aus dem Akkumulator aus, und anschließend treten Flammen aus ihm aus.

In einer bevorzugten Ausgestaltung umfasst der Flammen-Erzeuger der oder mindestens einer, bevorzugt jede Akkumulator-Attrappe jeweils zwei Bestandteile. Ein Bestandteil umfasst Pyrotechnik nach Art von Silvesterraketen, der andere Bestandteil umfasst einen Brenner, der eine brennbare Flüssigkeit zu verbrennen vermag. Die brennbare Flüssigkeit ist insbesondere ein gasförmiges oder flüssiges Gas. Bevorzugt umfasst die Akkumulator-Attrappe einen Tank für eine brennbare Flüssigkeit. Der aktivierte Brenner vermag eine brennbare Flüssigkeit in diesem Tank zu entzünden.

Die beiden Bestandteile, also der mit der Pyrotechnik und der mit dem Brenner, der lassen sich bevorzugt unabhängig voneinander aktivieren. Beim Aktivieren der Pyrotechnik werden Flammen gebildet, und zusätzlich tritt Rauch aus. Diese Ausgestaltung ermöglicht es, verschiedene mögliche Situationen beim Brand eines Akkumulators realitätsnah nachzubilden. Außerdem wird Redundanz geschaffen.

In einer Fortbildung dieser Ausgestaltung aktiviert das Steuergerät zunächst den Bestandteil mit der Pyrotechnik und anschließend den Bestandteil mit dem Brenner. Diese Ausgestaltung bildet den Brand eines Akkumulators besonders realitätsnah nach. Die Ausgestaltung bildet insbesondere folgende Situation nach, die beim Brand eines Akkumulators auftreten kann: Zunächst entstehen Rauch und wenige Flammen, was durch das Aktivieren der Pyrotechnik nachgebildet wird. Anschließend entstehen eine große Hitze sowie viele und / oder starke Flammen, was dadurch nachgebildet wird, dass der Brenner das brennbare Fluid entzündet. Dieses zweistufige Vorgehen bildet den Brand eines Akkumulators realitätsnäher nach, als wenn ausschließlich ein Brenner ein brennbares Fluid entzündet.

Wenn ein Akkumulator in Brand gerät, ist es in vielen Fällen wichtig, rasch eine Löschflüssigkeit, insbesondere Wasser, in das Innere des Akkumulators zu verbringen. Eine bevorzugte Ausgestaltung der erfindungsgemäßen Brandübungsanlage erleichtert es Feuerwehrleuten, dieses Vorgehen zu trainieren. Um die Löschflüssigkeit in das Innere eines Gegenstands zu verbringen, verwendet ein Feuerwehrmann häufig eine sogenannte Löschlanze. Eine Löschlanze ist innen hohl und in der Regel starr, lässt sich in den Gegenstand einführen, beispielsweise durch Einstechen, und leitet dann die Löschflüssigkeit in das Innere des Gegenstands.

Damit Feuerwehrleute dieses Vorgehen trainieren können, ist gemäß der bevorzugten Ausgestaltung die Brandübungsanlage wie folgt ausgestaltet: Mindestens eine Akkumulator-Attrappe, bevorzugt jede Akkumulator-Attrappe, umfasst jeweils ein Blech aus einem metallischen Werkstoff. Dieses Blech bildet einen Bereich der äußeren Oberfläche der Akkumulator-Attrappe. Das Blech ist lösbar mit dem Rest der Akkumulator-Attrappe verbunden. Ein Feuerwehrmann kann mit seiner Löschlanze das Blech durchstechen und anschließend eine Löschflüssigkeit durch das Blech hindurch in das Innere der Akkumulator-Attrappe verbringen. Die Löschflüssigkeit kühlt die Akkumulator-Attrappe und reduziert die Zufuhr von Sauerstoff. Bei einer Übung wird das Blech der Akkumulator-Attrappe durchstoßen. Weil das Blech lösbar befestigt ist, lässt sich das durchstoßene Blech leicht austauschen. Bei einem nachfolgenden weiteren Einsatz steht dann ein neues Blech zur Verfügung. In der Regel brauchen keine weiteren Bestandteile der Akkumulator-Attrappe ausgetauscht zu werden.

Manchmal gerät ein Elektrofahrzeug in Brand, während der oder mindestens ein oder sogar jeder Akkumulator des Elektrofahrzeugs an einer Ladesäule elektrisch aufgeladen wird. Das Elektrofahrzeug ist mittels eines Kabels mit der Ladesäule verbunden. Um die Situation mit dem Kabel realitätsnah nachzubilden, umfasst die Brandübungsanlage in einer Ausgestaltung eine Attrappe einer Ladesäule. Diese Ladesäulen-Attrappe umfasst eine Attrappe eines Kabels, die bevorzugt so an der Akkumulator-Attrappe befestigt ist wie ein reales Kabel an einer realen Ladesäule. Die Kabel-Attrappe ist mit der Fahrzeug-Attrappe verbunden oder lässt sich lösbar mit der Fahrzeug-Attrappe verbunden. Die Position, an welcher die Kabel-Attrappe mit der Fahrzeug-Attrappe verbunden ist, stimmt mit der Position überein, an der ein reales Kabel mit einem realen Elektrofahrzeug verbunden wird, um mindestens einen realen Akkumulator des Fahrzeugs aufzuladen.

Bei einem Brand eines realen Elektrofahrzeugs können die Ladesäule und / oder das Kabel den Zugang zum Inneren des Elektrofahrzeugs erschweren. Die Ausgestaltung mit der Ladesäulen-Attrappe umfassend die Kabel-Attrappe bildet die Situation nach, dass eine reale Ladesäule den Zugang zu einem brennenden Elektrofahrzeug erschwert.

Manchmal gerät ein Elektrofahrzeug in Brand, während das Elektrofahrzeug in einer Garage abgestellt ist. In einer bevorzugten Ausgestaltung umfasst die Brandübungsanlage zusätzlich eine Garage. Diese Garage ist so groß, dass sie die Fahrzeug-Attrappe aufzunehmen und zu umgeben vermag, bevorzugt vollständig zu umgeben vermag.

Bevorzugt lässt die Fahrzeug-Attrappe sich wahlweise in eine Position bringen, in welcher die Fahrzeug-Attrappe sich im Inneren der Garage befindet, oder in eine Position, in welche die Fahrzeug-Attrappe außerhalb der Garage positioniert ist.

In einer Ausgestaltung umfasst diese Garage mindestens eine Tür. Bevorzugt lässt sich die Situation herstellen, dass die oder jede Tür verschlossen ist und die Fahrzeug-Attrappe sich im Inneren der dadurch verschlossenen Garage befindet.

Besonders bevorzugt lässt sich die oder mindestens eine, bevorzugt jede Tür nur gewaltsam öffnen. Diese Situation bildet die reale Situation nach, dass ein Elektrofahrzeug im Inneren einer Garage in Brand gerät und die oder mindestens eine Tür sich nicht mehr regulär öffnen lässt, sondern nur gewaltsam. Bevorzugt lässt sich die Fahrzeug-Attrappe auch in eine Position bringen, in der die Fahrzeug-Attrappe sich teilweise im Inneren und teilweise außerhalb der Garage befindet.

In einer anderen Ausgestaltung umfasst die Brandübungsanlage zwei Fahrzeug-Attrappen, nämlich eine erste Fahrzeug-Attrappe im Inneren der Garage und eine zweite Fahrzeug-Attrappe außerhalb der Garage. Diese Ausgestaltung erspart die Notwendigkeit, die Fahrzeug-Attrappe so auszugestalten, dass sie sich über den Boden bewegen lässt. Außerdem lässt sich die Situation nachbilden, dass gleichzeitig zwei Elektrofahrzeuge in Brand geraten sind, nämlich eines in der Garage und eines außerhalb der Garage.

Bevorzugt ist die Fahrzeug-Attrappe so ausgestaltet, dass die oder mindestens eine Akkumulator-Attrappe und / oder die oder mindestens eine Reifen-Attrappe sich aktivieren lässt, während die Fahrzeug-Attrappe sich im Inneren der Garage befindet. Die Fahrzeug-Attrappe in der Garage stößt dann Nebel und Flammen aus, bevorzugt zuerst Nebel und dann Flammen. Weiterhin wird ermöglicht, dass die Fahrzeug-Attrappe außerhalb der Garage Nebel und Flammen ausstößt, bevorzugt zuerst Nebel und dann Flammen. Die Garage kann den Zugang zu der Fahrzeug-Attrappe erschweren. Die entsprechend ausgestaltete Brandübungsanlage bildet diese Situation nach.

Möglich ist, dass im Inneren der Garage zusätzlich eine Ladesäulen-Attrappe mit einer Kabel-Attrappe angeordnet ist. Diese Ausgestaltung bildet die Situation nach, dass ein Elektrofahrzeug in Brand gerät, während es in einer Garage steht, in der Garage eine Ladesäule angeordnet ist und die Ladesäule über ein Kabel mindestens einen Akkumulator auflädt.

Im Folgenden wird die Erfindung anhand eines Ausführungsbeispiels beschrieben. Hierbei zeigt

| | |
|---|---|
| Figur 1 | in einer perspektivischen Ansicht die Brandübungsanlage gemäß dem Ausführungsbeispiel, wobei die Brandübungsanlage eine Garage, eine Auto-Attrappe, eine Ladesäulen-Attrappe und einen Trolley mit vier Gasflaschen umfasst; |
| Figur 2 | die Brandübungsanlage von Figur 1 in einer Seitenansicht; |
| Figur 3 | die Brandübungsanlage von Figur 1 in einer Vorderansicht; |
| Figur 4 | die Brandübungsanlage von Figur 1 in einer Draufsicht; |
| Figur 5 | die Auto-Attrappe in der Ebene B - B von Figur 2; |
| Figur 6 | schematisch eine beispielhafte Akkumulator-Attrappe. |

Die Brandübungsanlage gemäß dem Ausführungsbeispiel vermag realitätsnah unterschiedliche Situationen zu erzeugen, wobei diese erzeugten Situationen solche Situationen nachbilden können, die beim Brand eines realen Straßenfahrzeugs, insbesondere eines Personenkraftwagens (im Folgenden kurz: eines Autos), mit einem Elektroantrieb auftreten können. Bekanntlich umfasst der Elektroantrieb eines Autos einen Elektromotor und mindestens eine wiederaufladbare Batterie (Akkumulator), in der Regel mehrere wiederaufladbare Batterien (Akkumulatoren). Der Elektromotor und die Akkumulatoren befinden sich an Bord des Fahrzeugs. Es ist auch möglich, dass ein Auto wahlweise von einem Elektroantrieb oder einem Verbrennungsmotor angetrieben wird (Hybridantrieb) und daher sowohl einen Elektroantrieb als auch einen Verbrennungsmotor und somit auch sowohl mindestens einen Akkumulator als auch einen Kraftstofftank umfasst. Alle diese Bestandteile sind an Bord des Fahrzeugs angeordnet. Die Brandübungsanlage des Ausführungsbeispiels vermag sowohl den Brand eines Autos, welches ausschließlich einen Elektroantrieb aufweist, als auch den Brand eines Autos mit Hybridantrieb nachzubilden. Außerdem vermag die Brandübungsanlage des Ausführungsbeispiels den Brand einen Bord eines realen Autos nachzubilden, welches einen Verbrennungsmotor, mindestens einen Akkumulator, einen Elektromotor sowie einen Generator aufweist, wobei der Verbrennungsmotor den Generator antreibt und der angetriebene Generator den oder jeden Akkumulator auflädt.

Im Ausführungsbeispiel bildet die Auto-Attrappe ein Personenfahrzeug nach. Möglich ist auch, eine Attrappe zu verwenden, welche ein sonstiges Straßenfahrzeug mit reinem Elektroantrieb oder Hybridantrieb nachbildet, beispielsweise einen Lastkraftwagen, einen Gabelstapler, ein Hubfahrzeug, einen Bus, ein sonstiges Nutzfahrzeug oder ein Zweirad (z.B. E-Bike, E-Scooter, E-Motorrad), oder auch ein landwirtschaftliches Fahrzeug, beispielsweise einen Mähdrescher, einen Feldhäcksler, einen Ladewagen oder eine Ballenpresse, wobei ein Elektroantrieb mindestens einen Bestandteil dieses landwirtschaftlichen Fahrzeugs bewegt. Möglich ist ferner, dass die Attrappe ein elektrisch angetriebenes Schienenfahrzeug nachbildet, beispielsweise eine Elektrolokomotive, einen Schienenbus, eine Straßenbahn oder einen Omnibus oder O-Bus (Oberleitungsbus). Die Fahrzeug-Attrappe, die dieses Schienenfahrzeug nachbildet, umfasst ebenfalls mindestens eine Akkumulator-Attrappe. Ein Schienenfahrzeug kann einen solchen Akkumulator umfassen, um entlang einer Strecke ohne Oberleitung und ohne Stromschiene fahren zu können.

Der Rest des Ausführungsbeispiels bezieht sich auf eine Brandübungsanlage, die den Brand eines elektrisch oder hybrid angetriebenen Personenkraftwagens (Elektroautos) nachbildet. Die Brandübungsanlage ermöglicht es, wenigstens eine Situation, die beim Brand eines realen Elektroautos auftreten kann, nachzubilden. Feuerwehrleute und Rettungskräfte können an der Brandübungsanlage ein der Situation angepasstes Handeln beim Brand eines Elektroautos trainieren.

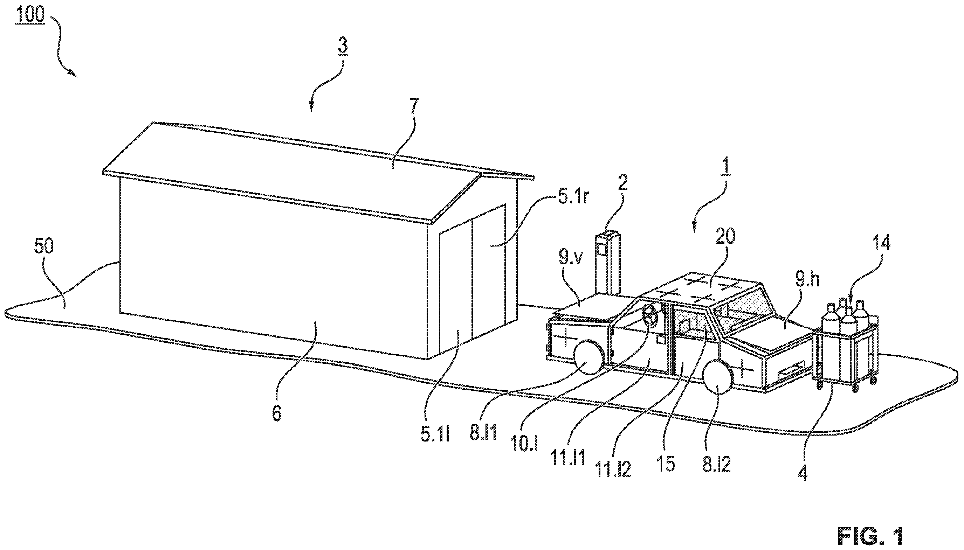

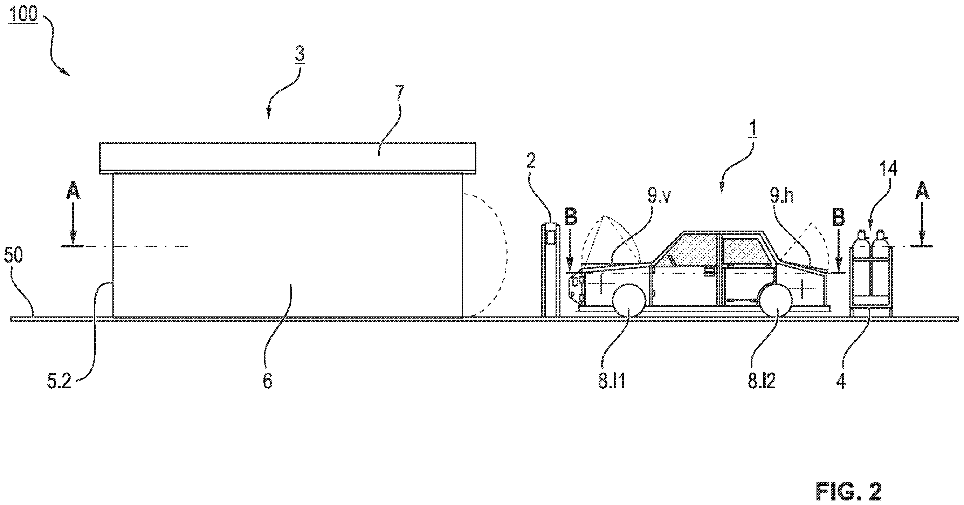

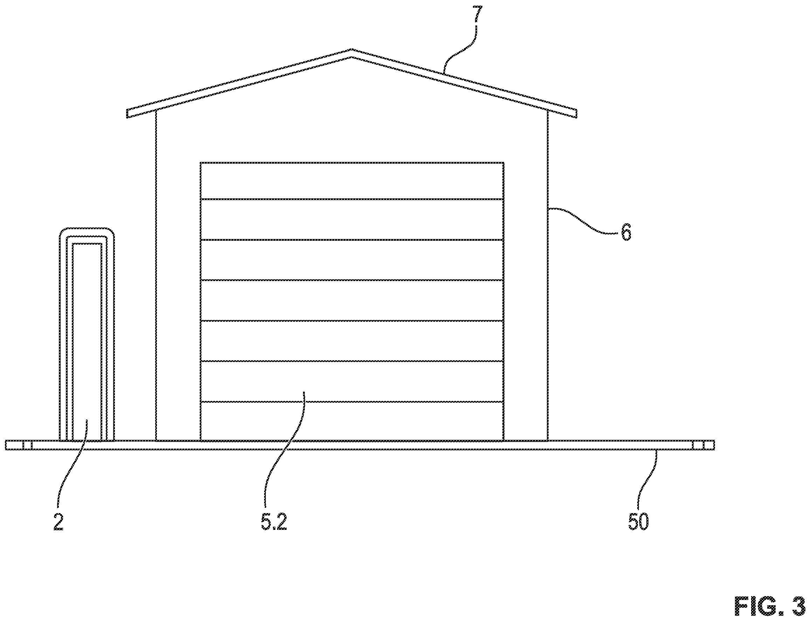

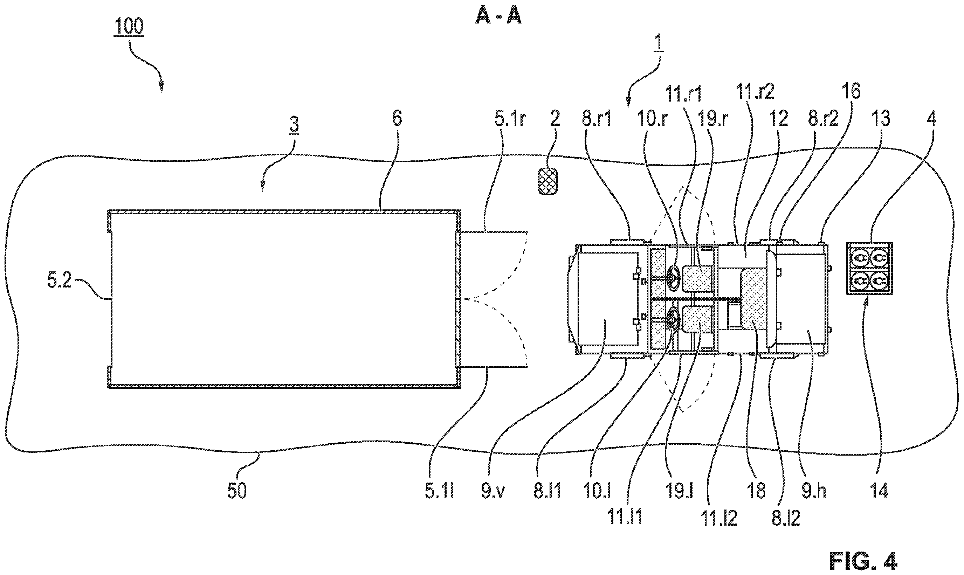

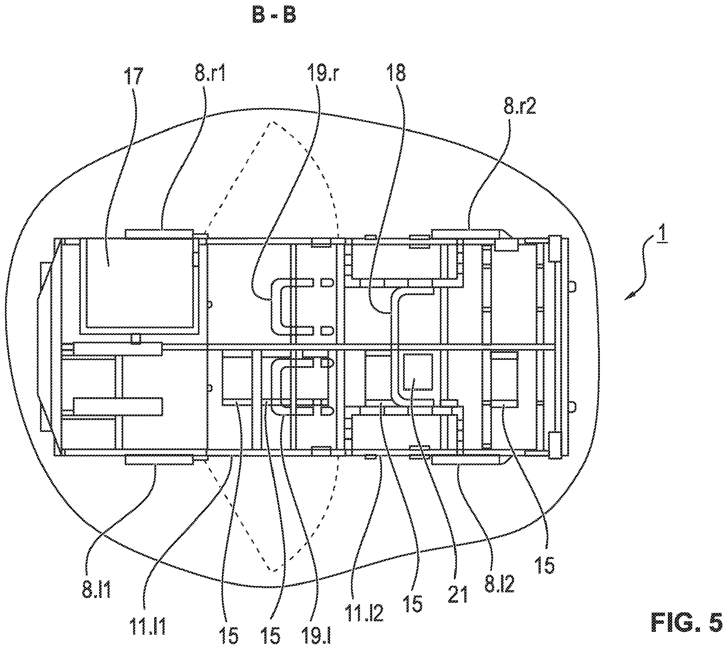

Figur 1 bis Figur 4 zeigen aus vier unterschiedlichen Betrachtungsrichtungen eine Brandübungsanlage 100 gemäß einem Ausführungsbeispiel der Erfindung, nämlich in einer perspektivischen Darstellung schräg von oben (Figur 1), in einer Seitenansicht (Figur 2), in einer Vorderansicht (Figur 3) und in einer Draufsicht (Figur 4). Die Begriffe "Seitenansicht" und "Vorderansicht" beziehen sich auf die Richtung der größten Ausdehnung (Längsachse) der Brandübungsanlage 100. Diese Längsachse liegt in den Zeichenebenen von Figur 2 und Figur 4 und steht senkrecht auf der Zeichenebene von Figur 3. Figur 4 zeigt in einer Draufsicht die Brandübungsanlage in der horizontalen Ebene A - A von Figur 2. Figur 5 zeigt in einer Draufsicht die Auto-Attrappe in der horizontalen Ebene B - B von Figur 2.

Die Brandübungsanlage 100 des Ausführungsbeispiels umfasst
- eine Attrappe 1 eines realen viertürigen Autos,
- eine Attrappe 2 einer Ladesäule zum Aufladen der Akkumulatoren eines realen Elektroautos,
- eine Garage (Carport) 3,
- einen Trolley (fahrbare Transporteinheit) 4 mit vier Gasflaschen 14 und
- einen feuerfesten und hitzebeständigen Untergrund 50, auf dem die anderen Bestandteile 1, 2, 3, 4, 14 stehen.

Die Bezeichnung "Attrappe" eines Gegenstands bezeichnet eine physikalische Nachbildung eines Gegenstands, wobei diese physikalische Nachbildung die äußeren Abmessungen und wenigstens näherungsweise die äußere Kontur des nachgebildeten Gegenstands aufweist und außerdem dann einen Brand des nachgebildeten Gegenstands nachzubilden vermag, wenn der nachgebildeten reale Gegenstand brennbar ist. Bevorzugt vermag die Attrappe wenigstens einen Teil derjenigen physikalischen und chemischen Effekte zu erzeugen, die bei einem Brand des nachgebildeten Gegenstands auftreten oder auftreten können. Bestandteile des nachgebildeten Gegenstands, die für die Nachbildung des Brands nicht erforderlich sind, können bei der Attrappe 1 fehlen. Insbesondere ist es möglich, dass die Attrappe 1 keine Nachbildung eines Elektromotors und / oder keine Nachbildung einer Instrumententafel (Cockpit) umfasst.

Die Auto-Attrappe 1 des Ausführungsbeispiels weist die äußeren Abmessungen eines üblichen Personenkraftwagens für vier oder fünf Insassen auf und bildet ein Auto nach, dessen Längsachse mit der Längsachse der Brandübungsanlage übereinstimmt und das im Beispiel von Figur 1, Figur 2 und Figur 4 von rechts nach links fährt. Die Bezeichnungen "links" und "rechts" für Bestandteile der Auto-Attrappe 1 beziehen sich auf diese Fahrtrichtung.

Die Auto-Attrappe 1 umfasst die folgenden Bestandteile:
- eine Karosserie 20,
- die Attrappen zweier linker Räder 8.l1 und 8.l2 sowie die Attrappen zweier rechter Räder 8.r1 und 8.r2, wobei die vier Rad-Attrappen 8.11, 8.12, 8.r1, 8.r2 bevorzugt drehbar an der Karosserie 20 befestigt sind, sodass die Auto-Attrappe 1 sich über einen Untergrund rollen lässt,
- einen vorderen Deckel 9.v und einen hinteren Deckel 9.h in der Karosserie 20, die einen Kofferraum-Deckel bzw. einen Motorraum-Deckel nachbilden,
- zwei linke Türen 11.11, 11.12 und zwei rechte Türen 11.r1, 11.r2, wobei in Figur 5 die beiden vorderen Türen 11.11, 11.r1 geöffnet und die beiden hinteren Türen 11.12, 11.r2 geschlossen gezeigt werden,
- die Attrappen von mehreren Akkumulatoren 15, wobei die Akkumulator-Attrappen 15 im Inneren der Karosserie 20 angeordnet und bevorzugt hohl sind,
- einen elektrischen Anschluss 16 an der Karosserie 20,
- optional einen Kraftstofftank 17 in der Karosserie 20 mit einem Tankdeckel an der Karosserie 20,
- einen linken vorderen Sitz 19.1 und einen rechten vorderen Sitz 19.r,
- ein linkes Lenkrad 10.1 und ein rechtes Lenkrad 10. r vor den beiden vorderen Sitzen 19.l, 19.r,
- optional eine nicht gezeigte Attrappe eines Bremspedals und
- eine durchgehende hintere Sitzbank 18 im Inneren der Karosserie 20.

In einer Ausgestaltung befindet sich mindestens eine Akkumulator-Attrappe 15 unter einem Deckel 9.v oder 9.h und eine weitere Akkumulator-Attrappe 15 unter einem vorderen Sitz 19.1, 19.r oder unter der Sitzbank 18.

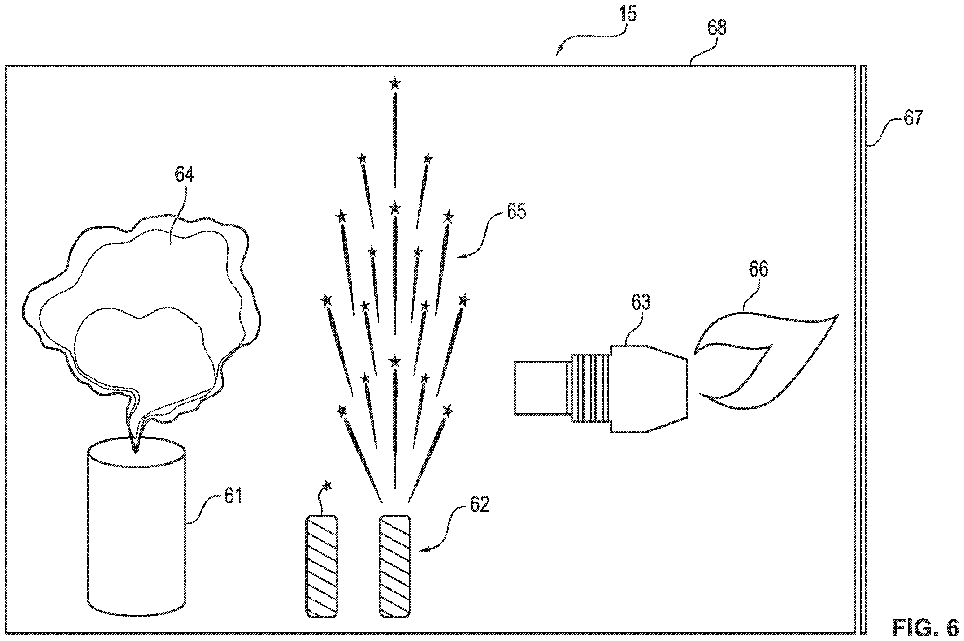

Figur 6 zeigt schematisch eine beispielhafte Akkumulator-Attrappe 15. Die Akkumulator-Attrappe 15 umfasst folgende Bestandteile:
- einen Nebeltopf 61,
- einen Bestandteil 62 mit Pyrotechnik umfassend Feuerwerksraketen,
- einen Brenner 63 für ein brennbares Fluid, besondere für gasförmiges oder flüssiges Propan,
- bevorzugt einen nicht gezeigten Tank für das brennbare Fluid und
- ein Blech 67.

Das Blech 67 ist lösbar auf eine Oberfläche der im Beispiel quaderförmiges Akkumulator-Attrappe 15 aufgebracht, beispielsweise auf ein Gehäuse 68 der Akkumulator-Attrappe 15. Das Blech 67 lässt sich befestigen und wieder lösen.

Der Nebeltopf 61 und der Pyrotechnik-Bestandteil 62 gehören zum Nebelerzeuger der Akkumulator-Attrappe 15. Der Pyrotechnik-Bestandteil 62 und der Brenner 63 gehören zum Flammen-Erzeuger der Akkumulator-Attrappe 15.

Die drei Bestandteile 61, 62, 63 lassen sich bevorzugt unabhängig voneinander anzusteuern und dadurch aktivieren. Der aktivierte Nebeltopf 61 stößt Nebel 64 aus. Der aktivierte Pyrotechnik-Bestandteil 62 stößt Flammen und Nebel 65 aus. Wenn der Brenner 63 ein brennbares Fluid entzündet, so tritt eine Flamme 66 aus. Falls das brennbare Fluid eine brennbare Flüssigkeit ist, so breitet diese Flamme 66 sich besonders rasch aus.

Anstelle zweier Lenkräder 10.1, 10.r, vgl. Figur 4, kann auch ein einziges Lenkrad vorgesehen sein, welches sich wahlweise vor dem linken vorderen Sitz 19.l oder dem rechten vorderen Sitz 19.r befestigen lässt. Beide Ausgestaltungen berücksichtigen die Möglichkeit, dass ein Auto und damit auch ein Elektroauto, welches in Brand gerät, linksgesteuert oder rechtsgesteuert sein kann. Möglich ist auch, dass die Auto-Attrappe 1 ein Lenkrad umfasst, welches fest vor dem linken vorderen Sitz 19.l befestigt ist.

Aufgrund gesetzlicher Vorgaben ist ein Bremspedal in einem realen Auto aus einem ausreichend stabilen Material, in der Regel aus Stahl oder einem sonstigen Metall, gefertigt. Bei einem realen Brand kann es erforderlich sein, dieses Bremspedal abzuschneiden, um einen eingeklemmten Insassen zu retten und / oder um Zugang zu einem Gegenstand im Inneren des Autos zu erhalten. In einer Ausgestaltung umfasst die Auto-Attrappe 1 daher eine Bremspedal-Attrappe, die die äußere Form eines Bremspedals hat und sich mit einem solchen Werkzeug abtrennen lässt, mit dem auch ein reales Bremspedal abgeschnitten werden kann.

Die Auto-Attrappe 1 umfasst weiterhin folgende Bestandteile, die nicht notwendigerweise in einem realen Auto vorhanden sind:
- einen Schaltkasten 12 und
- einen Gasanschluss 13.

Die Auto-Attrappe 1 wird beispielsweise unter Verwendung eines realen gebrauchten Autos hergestellt, beispielsweise eines schrottreifen Autos. Möglich ist auch, dass Blechteile zu der Auto-Attrappe 1 zusammengeschweißt werden.

Die Auto-Attrappe 1 lässt sich dank der drehbar montierten Rad-Attrappen 8.11, 8.l2, 8.r1, 8.r2 über den Untergrund 50 schieben, ohne die Auto-Attrappe 1 anheben zu müssen. Möglich, aber für die Nachbildung eines Brandes nicht erforderlich ist, dass die Auto-Attrappe 1 einen funktionierenden Antrieb, eine funktionierende Lenkung und eine funktionierende Bremse besitzt. Die Rad-Attrappen 8.11, 8.l2, 8.r1, 8.r2 können auf zwei nicht gezeigten Achsen montiert sein. Möglich ist auch, dass die Rad-Attrappen 8.11, 8.12, 8.r1, 8.r2 direkt drehbar an der Karosse 20, also quasi per Einzelradaufhängung, befestigt sind.

Die Brandübungsanlage 100 umfasst eine Garage (Carport) 3, um die Situation nachbilden zu können, dass ein Elektroauto in einer Garage in Brand gerät. Im Ausführungsbeispiel ist dann, wenn die Auto-Attrappe 1 in der Garage 3 ist, in jeder Richtung zwischen der Auto-Attrappe 1 und der nächstgelegenen Wand der Garage 3 ein Platz von weniger als 1 m vorhanden. Diese Ausgestaltung bildet besonders realitätsnah die Situation nach, dass ein Elektroauto im Inneren einer Garage in Brand gerät, wobei die Garage nur relativ wenig größer als das Elektroauto ist. Die Auto-Attrappe 1 lässt sich wahlweise in eine Position bringen,
- in der sie vollständig von der Garage 3 umgeben ist,
- in der sie teilweise von der Garage 3 umgeben ist oder
- in der sie sich vollständig außerhalb der Garage 3 befindet.

Die Garage 3 der Brandübungsanlage 100 weist einen rechteckigen Grundriss auf und umfasst
- vier vertikale Wände 6, nämlich zwei Längswände und zwei Stirnwände,
- ein Dach 7,
- eine Flügeltür mit zwei Flügeln 5.1l und 5.1r in der Stirnwand, die in der Darstellung von Figur 2 zu der Auto-Attrappe 1 hin zeigt, sowie
- ein Rolltor 5.2 in der gegenüberliegenden Stirnwand.

Die Garage 3 kann zusätzlich zu den oder anstelle der Türen 5.1l, 5.1r und 5.2 auch ein Schwingtor oder ein Sektionaltor umfassen. Die Garage 3 umschließt einen quaderförmigen Raum, der die Auto-Attrappe 1 aufzunehmen vermag.

Die Brandübungsanlage 100 des Ausführungsbeispiels umfasst weiterhin eine Attrappe 2 einer elektrischen Ladesäule, um die Situation nachzubilden, dass ein Elektroauto in Brand gerät, während das Elektroauto über ein Ladekabel elektrisch mit einer Ladesäule verbunden ist und die Akkumulatoren des Elektroautos aufgeladen werden oder bereits aufgeladen worden sind. Im Ausführungsbeispiel befindet sich die Ladesäulen-Attrappe 2 außerhalb der Garage 3. Die Ladesäulen-Attrappe 2 kann auch im Inneren der Garage 3 angeordnet sein, weil im Inneren einer realen Garage auch eine Ladesäule vorhanden sein kann. Möglich ist auch, dass die Brandübungsanlage 100 eine Ladesäulen-Attrappe 2 außerhalb der Garage 3 und eine weitere Ladesäulen-Attrappe (nicht gezeigt) in der Garage 3 umfasst.

Die Ladesäulen-Attrappe 2 weist die äußeren Abmessungen einer realen Ladesäule auf. Bevorzugt umfasst die Ladesäulen-Attrappe 2 ein elektrisches Kabel oder die Nachbildung eines elektrischen Kabels, wobei dieses Kabel bzw. diese Kabel-Nachbildung mit der Ladesäulen-Attrappe 2 verbunden ist und sich in den elektrischen Anschluss 16 der Auto-Attrappe 1 einstecken lässt. In einer Ausgestaltung vermag die Ladesäulen-Attrappe 2 tatsächlich elektrische Energie für elektrische Verbraucher an Bord der Auto-Attrappe 1 bereitzustellen. Möglich ist, die Kabel-Nachbildung in einer entsprechenden Aufnahme der Auto-Attrappe 1 zu arretieren, um die Situation nachzubilden, dass ein reales Ladekabel oder eine reale Aufnahme für ein Ladekabel arretiert ist und sich aufgrund eines Brands verformt oder schmilzt und das Ladekabel daher nicht mehr aus der Aufnahme gezogen werden kann.

Mithilfe des Trolleys 4 lassen sich die vier Gasflaschen 14 zu dem Gasanschluss 13 der Auto-Attrappe 1 fahren, und jede Gasflasche 14 lässt sich aus dem Trolley 4 nehmen. Flüssiges Gas aus den Gasflaschen 14 lässt sich in Fluidtanks von Bestandteilen der Auto-Attrappe 1 verbringen, was weiter unten detaillierter beschrieben wird. Selbstverständlich ist auch eine andere Anzahl von Gasflaschen oder eine andere Art, um flüssiges Gas zu der Auto-Attrappe 1 zu bringen, möglich.

Der Schaltkasten 12 gehört zu einem signalverarbeitenden Steuergerät und vermag verschiedene Stellglieder der Auto-Attrappe 1 anzusteuern. Bevorzugt kann ein Benutzer an einem Betätigungselement oder einer sonstigen Benutzeroberfläche des Schaltkastens 12 einen Ablauf vorgeben, beispielsweise indem der Benutzer einzelne Schritte auswählt, und / oder einen von mehreren vorgegebenen und abgespeicherten möglichen Abläufen auswählen und auf diese Weise vorgeben. Der vorgegebene oder ausgewählte Ablauf bildet eine Situation nach, die beim Brand eines Elektroautos auftreten kann. Dieselbe erfindungsgemäße Brandübungsanlage 100 kann nacheinander unterschiedliche Abläufe realisieren und dadurch verschiedene Situationen nachbilden, die beim Brand eines Elektroautos auftreten können. Insbesondere lassen sich unterschiedliche Reihenfolgen vorgeben, wobei jede vorgegebene Reihenfolge jeweils eine Abfolge festlegt, in der die jeweiligen Erzeuger an Bord der Fahrzeug-Attrappe 1 Nebel und / oder Flammen ausstoßen. Bevorzugt lassen sich außerdem verschiedene Bestandteile der Brandübungsanlage 100 arretieren oder freigeben, beispielsweise eine Tür 5.1l, 5.1r, 5.2 der Garage 3 oder ein Bestandteil der Fahrzeug-Attrappe 1.

Ein möglicher Ablauf ist der folgende Ablauf: Zunächst stößt die Auto-Attrappe 1 leicht flüchtigen Qualm aus, indem sie Nebel mit niedrigerem Druck erzeugt. Anschließend stößt sie starken Qualm aus, indem sie Nebel mit erhöhtem Druck erzeugt. Als nächstes erzeugt die Auto-Attrappe 1 leichte Flammen. Zum Abschluss erzeugt sie eine große Flammenbildung, wofür sie ein Feuerwerk abbrennt. Hierfür werden die oben beschriebenen Nebel-Erzeuger und Flammen-Erzeuger nacheinander angesteuert und dadurch aktiviert.

In dem gezeigten Ausführungsbeispiel steht die Auto-Attrappe 1 vor der Garage 3. In der gezeigten Situation lässt sich das Ereignis nachbilden, dass ein Elektroauto in Brand gerät, während es vollständig außerhalb einer Garage steht.

Bevorzugt lässt sich die Auto-Attrappe 1 sich in eine Position verbringen, in der sie teilweise oder vollständig in der Garage 3 befindet. Auch dann, wenn die Fahrzeug-Attrappe 1 vollständig oder teilweise in der Garage 3 ist, lassen sich die Attrappen für die Bestandteile des Autos auslösen und erzeugen dann Flammen und Qualm wie beim Brand des realen Bestandteils. Dadurch lässt sich die Situation nachbilden, dass ein Elektroauto in Brand gerät, während es in einer Garage steht und der Zugang zum Auto eingeschränkt sein kann. Bevorzugt lässt sich wahlweise mindestens eine der folgenden Situationen herstellen:
- Die Flügeltüren 5.1l, 5.1r sowie das Rolltor 5.2 an den beiden Stirnwänden der Garage 3 sind geöffnet.
- Die Flügeltüren 5.1l, 5.1r sowie das Rolltor 5.2 an den beiden Stirnwänden sind geschlossen, lassen sich aber mit jeweils einem Schlüssel öffnen, wobei dieser Schlüssel auch zur Verfügung steht.
- Weder die Flügeltüren 5.1l, 5.1r noch das Rolltor 5.2 lassen sich mittels eines Schlüssels öffnen, beispielsweise weil ein Schlüssel nicht verfügbar oder ein Mechanismus zum Öffnen defekt ist. Die Flügeltüren 5.1l, 5.1r und / oder das Rolltor 5.2 müssen in dieser Situation von außen aufgebrochen werden, um Zugang zu der Auto-Attrappe 1 in der Garage 3 zu erhalten.

Jede dieser Situationen bildet eine Situation nach, die in der Realität auftreten kann und daher geübt werden soll.

Der Brand eines Akkumulators umfasst daher in der Regel eine Abfolge von unterschiedlichen Ereignissen, die sich als eine Kettenreaktion bezeichnen lässt. Die Akkumulator-Attrappe 15 bildet wenigstens eine typische Abfolge beim Brand eines Akkumulators nach, bevorzugt wahlweise eine von mehreren möglichen Situationen.

Falls ein realer Akkumulator in Brand gerät, so entsteht in der Regel zunächst Qualm, und danach brennt der Akkumulator ab und strahlt dabei viel Wärmeenergie ab. Um diese Effekte nachzubilden, vermag jede Akkumulator-Attrappe 15 an Bord der Auto-Attrappe 1 sowohl Qualm als auch Nebel als auch Flammen zu erzeugen. Beispielsweise sind im Inneren der Akkumulator-Attrappe 15 oder wenigstens in der Nähe der Akkumulator-Attrappe 15 ein Behälter und ein Überdruck-Erzeuger angeordnet, wobei der Überdruck-Erzeuger Druck zu erzeugen vermag und wobei der erzeugte Druck künstlichen Nebel aus dem Behälter ausstößt. Die Flammen werden beispielsweise mithilfe eines Bodenfeuerwerks, welches ähnlich wie ein Silvesterfeuerwerk aufgebaut ist, oder durch Verbrennen von flüssigem und / oder gasförmigen Gas erzeugt, vgl. Figur 6. In einer Ausgestaltung umfasst die oder jede Akkumulator-Attrappe 15 jeweils einen Tank für eine brennbare Flüssigkeit, wobei diese Flüssigkeit in Brand gesetzt wird, um Flammen zu erzeugen.

In einer Ausgestaltung lässt sich flüssiges Gas aus den Gasflaschen 14 durch den Gasanschluss 13 hindurch in einen Behälter für die Akkumulator-Attrappen 15 verbringen. Die Gasflaschen 14 werden fluiddicht mit dem Gasanschluss 13 verbunden, Gas fließt in den Behälter, und danach werden die Gasflaschen 14 wieder vom Gasanschluss gelöst. Bevor ein Brand an Bord der Auto-Attrappe 1 ausgelöst wird, wird der Trolley 4 mit den Gasflaschen 14 außer Reichweite des hervorgerufenen Feuers gebracht.

Bevorzugt steuert der Schaltkasten 12 jeweils mindestens ein Stellglied der Akkumulator-Attrappe 15 an. Die Ansteuerung bewirkt bevorzugt den folgenden Effekt: Die angesteuerte Akkumulator-Attrappe 15 erzeugt zunächst Qualm und / oder Nebel und anschließend Feuer. Es ist möglich, dass alle Akkumulator-Attrappen 15 gleichzeitig angesteuert werden und jeweils zunächst Qualm und dann Feuer erzeugen. Möglich ist ferner, dass die oder auch nur einzelne Akkumulator-Attrappen 15 nacheinander angesteuert werden. Bevorzugt lässt sich die Reihenfolge vorgeben, in der die Akkumulator-Attrappen 15 angesteuert werden.

Im Beispiel von Figur 6 aktiviert der Schaltkasten 12 bevorzugt zunächst den Nebeltopf 61, der daraufhin einen Nebel 64 erzeugt. Anschließend aktiviert der Schaltkastens den Pyrotechnik-Bestandteil 62, und danach treten weiterer Nebel sowie Flammen aus. Als letztes aktiviert der Schaltkasten 12 den Brenner 63, und der aktivierte Brenner 63 verbrennt eine brennbare Flüssigkeit aus den Gasflaschen 14. Dieser Ablauf bildet die Vorgänge beim Brand eines realen Akkumulators besonders realitätsnah nach.

In manchen Fällen gerät bei einem Brand eines Fahrzeugs mit Elektroantrieb zunächst mindestens ein Reifen in Flammen, und der entflammte Reifen setzt einen Akkumulator in Brand. Um dieses Vorgehen nachzubilden, ist in einer Ausgestaltung die erfindungsgemäße Brandübungsanlage wie folgt ausgestaltet: Zunächst wird der Flammen-Erzeuger einer Reifen-Attrappe 8.11, 8.l2, 8.r1, 8.r2 angesteuert und beginnt damit, Flammen zu erzeugen. Anschließend wird die oder mindestens eine Akkumulator-Attrappe 15 angesteuert. Der Nebel-Erzeuger der angesteuerte Akkumulator-Attrappe 15 beginnt damit, Nebel zu erzeugen. Oder der Flammen-Erzeuger der angesteuerten Akkumulator-Attrappe 15 beginnt damit, Flammen zu erzeugen. Falls die Fahrzeug-Attrappe 1 mehrere Akkumulator-Attrappen umfasst, so wird bevorzugt diejenige Akkumulator-Attrappe 15 angesteuert, die der zuvor angesteuerten Reifen-Attrappe 8.11, 8.l2, 8.r1, 8.r2 am nächsten gelegen ist.

Diese Ausgestaltung lässt sich mit einer weiter oben beschriebenen Ausgestaltungen wie folgt kombinieren: Zunächst erzeugt der Flammen-Erzeuger einer Reifen-Attrappe 8.11, 8.l2, 8.r1, 8.r2 Flammen. Danach erzeugt der Nebel-Erzeuger einer Akkumulator-Attrappe 15 Nebel. Anschließend erzeugt der Flammen-Erzeuger dieser Akkumulator-Attrappe 15 Flammen.

In einer Ausgestaltung ermöglicht die Brandübungsanlage 100 des Ausführungsbeispiels es einem Feuerwehrmann, folgendes Vorgehen beim Löschen eines Brandes in einem Akkumulator üben: Der Feuerwehrmann stößt eine starre Löschlanze in den Akkumulator hinein, sodass ein Teil der Löschlanze sich im Inneren des Akkumulators befindet. Die Löschlanze umfasst eine hohle Röhre. Eine Fördereinheit fördert eine Löschflüssigkeit in das Innere der Löschlanze hinein, und die Löschlanze leitet diese Löschflüssigkeit durch die hohle Röhre in das Innere des Akkumulators.

Um diesen Vorgang zu üben, kann der Feuerwehrmann mit einer realen Löschlanze das Blech 67 mindestens einmal durchstoßen und bewirken, dass eine Löschflüssigkeit in das Innere der Akkumulator-Attrappe 15 fließt. Möglich ist, dass mehrere Löschlanzen durch dasselbe Blech 67 hindurch gestoßen werden. Nach einem Übungseinsatz ist das Blech 67 durchlöchert. Weil es lösbar befestigt ist, lässt es sich leicht durch ein neues Blech ersetzen.

Ein Verbrennungsvorgang benötigt bekanntlich Sauerstoff. In einer bevorzugten Ausgestaltung umfasst jede Akkumulator-Attrappe 15 eine Klappe und einen Stellantrieb für diese Klappe. Bei geöffneter Klappe kann Sauerstoff in den mit Gas gefüllten Behälter der Akkumulator-Attrappe 15 fließen und dort einen Brand nähren. Bei geschlossener Klappe fließt kein oder wenigstens weniger Sauerstoff in den Innenraum, und das Feuer erlischt. Zu Beginn eines Einsatzes sind die Klappen der Akkumulator-Attrappe 15 geöffnet. Falls der Brand rasch oder vorzeitig beendet werden soll, beispielsweise weil ein Mensch gefährdet oder eine Störung aufgetreten ist, so betätigt ein Benutzer ein nicht gezeigtes Betätigungselement, welches die Antriebe für die Klappen aktiviert und bevorzugt am Schaltkasten 12 angebracht ist. Die aktivierten Antriebe schließen die Klappen. In einer Ausgestaltung ist jeder Klappe jeweils eine Feder zugeordnet, und die zugeordnete Feder ist bestrebt, die Klappe in geschlossener Position zu halten. Ein Antrieb öffnet die Klappe gegen die Federkraft, und die Klappe rastet bevorzugt in der geöffneten Stellung ein. Falls das Betätigungselement betätigt wird, wird das optionale Einrasten der Klappe aufgehoben, und die Feder schließt die Klappe. Beim Ausfall des Antriebs wird die Klappe von der Feder in die verschließende Position verbracht.

Bei einem realen Auto lassen sich in der Regel sowohl die Motorraum-Haube als auch die Kofferraum-Haube durch jeweils ein Betätigungselement aus dem Inneren des Fahrzeugs heraus öffnen. Die jeweilige Drehachse dieser Haube kann - gesehen in Fahrtrichtung des Autos -je nach Bauart vorne oder hinten an der Haube angeordnet sein. Der Motor und / oder die Akkumulatoren können sich je nach Bauart unter der vorderen oder unter der hinteren Haube befinden. Bei einem realen Brand können diese Betätigungselemente aber nicht zugänglich sein oder blockieren oder beschädigt sein oder blockieren. Außerdem ist einem Feuerwehrmann oft nicht bekannt, was sich unter der Haube eines bestimmten brennenden Autos befindet. Möglich ist auch, dass eine Haube verbeult oder auf andere Weise blockiert ist.

Um unterschiedliche Situationen der Realität nachbilden zu können, lassen sich bevorzugt sowohl die vordere Haube 9.v als auch die hintere Haube 9.h wahlweise um eine vordere oder um eine hintere Achse öffnen, wobei sich die Vorderachse in Fahrtrichtung vor und die hintere Achse in Fahrtrichtung hinter der Haube 9.v, 9.h befindet. Außerdem lässt sich wahlweise eine Situation nachstellen, in der sich die beiden Haube 9.v, 9.h durch jeweils ein Betätigungselement im Inneren des Autos öffnen lassen, als auch eine Situation, in der dies nicht möglich ist, beispielsweise weil beide Hauben blockiert sind.

Bei einem realen Auto mit Elektroantrieb können sowohl die Batterie als auch ein Kabelbaum sich erhitzen und dann Qualm ausstoßen, wobei dieser Qualm die Sicht behindert. Um dieses Ereignis nachzubilden, ist bevorzugt unter der hinteren Sitzbank 18 ein Nebel-Erzeuger 21 angeordnet. Dieser Nebel-Erzeuger 21 lässt sich von außen ansteuern und vermag nach einer entsprechenden Ansteuerung Nebel auszustoßen.

Bei einem realen Brand eines Autos mit Elektroantrieb gerät häufig auch mindestens ein Reifen des brennenden Autos in Brand. Eine mögliche Ursache ist die große Hitze, die bei einem Brand eines Akkumulators entsteht. Außerdem kann dann, wenn das Auto zusätzlich einen Verbrennungsmotor und daher auch einen Kraftstofftank aufweist, flüssiger Kraftstoff austreten und brennen. Auch Schmiermittel kann austreten und brennen.

Um diese Situation nachzubilden, kann jede Reifen-Attrappe 8.11, 8.l2, 8.r1, 8.r2 den Brand eines Reifens nachbilden, bevorzugt eines Reifens aus Gummi. In einer Ausgestaltung umfasst jede Reifen-Attrappe 8.l1, 8.l2, 8.r1, 8.r2 jeweils einen Tank für flüssiges brennbares Gas sowie einen Brenner. Dieser Brenner kann flüssiges Gas, welches aus dem Tank der Reifen-Attrappe 8.11, 8.l2, 8.r1, 8.r2austritt, entflammen und dadurch einen Brand eines realen Reifens nachbilden. Der Tank steht bevorzugt in einer Fluidverbindung mit dem Gasanschluss 13. Möglich ist auch, dass jede Reifen-Attrappe 8.11, 8.12, 8.r1, 8.r2 jeweils mehrere Stellen besitzt, an denen Flammen austreten können. Diese Ausgestaltung bildet die Situation nach, dass auch ein realer Reifen an unterschiedlichen Stellen in Brand geraten kann. Möglich ist auch, dass mithilfe einer Düse der Austritt von Flammen an einer bestimmten Stelle nachgebildet wird. In einer Ausgestaltung ist jede Reifen-Attrappe 8.l1, 8.l2, 8.r1, 8.r2 aus Gummi hergestellt.

Möglich ist, dass eine Reifen-Attrappe 8.11, 8.l2, 8.r1, 8.r2 zusätzlich eine Düse aufweist, welche flüssiges Gas ausspritzt. Der Brenner entzündet das ausgespritzte flüssige Gas. Möglich ist, dass zusätzlich Nebel austritt, wobei dieser austretende Nebel die Situation nachbildet, dass beim Brand eines realen Reifens aus Gummi Rauch aufsteigt und die Sicht behindert. Dieser Nebel kann von einem Nebel-Erzeuger einer Akkumulator-Attrappe 15 oder von einem bevorzugt gleichartig ausgestalteten Nebel-Erzeuger der Reifen-Attrappe 8.l1, 8.l2, 8.r1, 8.r2 erzeugt werden.

Der Schaltkasten 12 steuert jeweils mindestens ein Stellglied jeder Reifen-Attrappe 8.11, 8.12, 8.r1, 8.r2 an, und die Ansteuerung bewirkt, dass Flammen und optional Nebel an der Reifen-Attrappe 8.11, 8.l2, 8.r1, 8.r2 erzeugt werden.

Ein Auto kann zusätzlich zu dem Elektroantrieb einen Verbrennungsmotor und einen Kraftstofftank aufweisen (Hybridantrieb). Bei einem realen Brand eines Autos mit einem Kraftfahrzeugtank wird häufig versucht, die Zufuhr von Sauerstoff zu dem Kraftstofftank zu unterbinden, um zu verhindern, dass der erhitzte Kraftstoff entflammt. Außerdem soll in manchen Fällen eine löschende Flüssigkeit in den Kraftstofftank verbracht werden. Um mindestens eines dieser beiden Ziele zu erreichen, ist es erforderlich, einen Tankdeckel zu öffnen. In einer Ausgestaltung umfasst daher die Auto-Attrappe 1 eine Attrappe 17 eines Kraftstofftanks mit einem Tankdeckel, wobei die Tank-Attrappe 17 zusätzlich einen Mechanismus umfasst, der das Öffnen des Tankdeckels erschwert, beispielsweise einen magnetischen Verschluss, oder sogar den Tankdeckel arretiert. In der Tank-Attrappe 17 kann Kraftstoff oder eine sonstige brennbare Flüssigkeit enthalten sein.

### Bezugszeichenliste

| | |
|---|---|
| 1 | Auto-Attrappe, umfasst die Karosserie 20, die Rad-Attrappen 8.11, 8.l2, 8.r1, 8.r2, die Deckel 9.v und 9.h, die Lenkräder 10.l und 10.r, die Türen 11.11, 11.12, 11.r1, 11.r2, die Akkumulator-Attrappen 15, den elektrischen Anschluss 16, den Kraftstofftank 17, die hintere Sitzbank 18, die vorderen Sitze 19.l und 19.r, den optionalen Nebel-Erzeuger 21 und den Schaltkasten 12 |
| 2 | Ladesäulen-Attrappe, steht auf dem Untergrund 50, umfasst eine Attrappe eines Ladekabels |
| 3 | Garage (Carport), umfasst die Wände 6, das Dach 7, die Flügeltüren 5.1l, 5.1r und 5.2 sowie das Rolltor 5.2, vermag die Auto-Attrappe 1 vollständig aufzunehmen |
| 4 | fahrbarer Trolley für vier Gasflaschen 14 |
| 5.1l, 5.1r | Flügeltüren an einer Stirnwand der Garage 3 |
| 5.2 | Rolltor an einer Stirnwand der Garage 3 |
| 6 | Wände der Garage 3 |
| 7 | Dach der Garage 3 |
| 8.11, 8.12 | Attrappen der linken Räder, gehören zu der Auto-Attrappe 1 |
| 8.r1, 8.r2 | Attrappen der rechten Räder, gehören zu der Auto-Attrappe 1 |
| 9.h | hinterer Deckel in der Karosserie 20 der Auto-Attrappe 1 |
| 9.v | vorderer Deckel in der Karosserie 20 der Auto-Attrappe 1 |
| 10.l | linkes Lenkrad der Auto-Attrappe 1, befindet sich vor dem linken vorderen Sitz 19.l |
| 10.r | rechtes Lenkrad der Auto-Attrappe 1, befindet sich vor dem rechten vorderen Sitz 19.r |
| 11.l1, 11.12 | linke Türen in der Karosserie 20 der Auto-Attrappe 1 |
| 11.r1, 11.r2 | rechte Türen in der Karosserie 20 der Auto-Attrappe 1 |
| 12 | Schaltkasten, mit dessen Hilfe ein Benutzer einen Ablauf für den nachgebildeten Brand eines Elektroautos vorgeben kann, gehört zu einem signalverarbeitenden Steuergerät der Auto-Attrappe 1 |
| 13 | Gasanschluss in der Karosserie 20 der Auto-Attrappe 1 für die Gasflaschen 14 |
| 14 | Gasflaschen im Trolley 4, können Gas aufnehmen und lassen sich mit dem Gasanschluss 13 verbinden und wieder von dem Gasanschluss 13 trennen |
| 15 | Akkumulator-Attrappen in der Karosserie 20 der Auto-Attrappe 1, vermögen Qualm und Feuer zu erzeugen |
| 16 | elektrischer Anschluss in der Karosserie 20 der Auto-Attrappe 1 für 220 V und optional für 400 V |
| 17 | Attrappe eines Tanks mit einem Tankdeckel in der Karosserie 20 |
| 18 | hintere Sitzbank in der Auto-Attrappe 1 |
| 19.l, 19.r | vordere Sitze in der Auto-Attrappe 1, befinden sich hinter den Lenkräder 10.l und 10.r |
| 20 | Karosserie der Auto-Attrappe 1 |
| 21 | optionaler Nebel-Erzeuger unter der hinteren Sitzbank 18 |
| 50 | feuerfester und hitzebeständiger Untergrund, auf dem die Auto-Attrappe 1, die Ladesäule-Attrappe 2 und die Garage 3 stehen |
| 61 | Nebeltopf der Akkumulator-Attrappe 15 |
| 62 | Bestandteil mit Pyrotechnik der Akkumulator-Attrappe 15 |
| 63 | Brenner der Akkumulator-Attrappe 15 |
| 64 | Nebel, den der Nebeltopf 61 erzeugt |
| 65 | Flammen und Nebel, die der Pyrotechnik-Bestandteil 62 erzeugt |
| 66 | Flamme, die der Brenner 63 erzeugt |
| 67 | lösbar montiertes Blech, am Gehäuse 68 montiert, bildet einen Bereich der äußeren Oberfläche der Akkumulator-Attrappe 15, lässt sich von einer Löschlanze durchstoßen |
| 68 | Gehäuse der Akkumulator-Attrappe 15, trägt das Blech 67 |
| 100 | Brandübungsanlage, umfasst die Auto-Attrappe 1, die Ladesäulen-Attrappe 2, die Garage 3, den Trolley 4 mit den Gasflaschen 14 und den Untergrund 50 |

## Patentansprüche

1. Brandübungsanlage (100) umfassend eine Attrappe (1) eines Fahrzeugs, insbesondere eines Straßenfahrzeugs,
wobei die Fahrzeug-Attrappe (1) die äußeren Abmessungen eines Fahrzeugs aufweist und
- mindestens eine Attrappe (15) eines Akkumulators für ein Fahrzeug und
- mindestens eine Attrappe (8.l1, 8.l2, 8.r1, 8.r2) eines Reifens eines Fahrzeugs
umfasst,
wobei die oder jede Akkumulator-Attrappe (15)
- an Bord der Fahrzeug-Attrappe (1) an einer möglichen Position eines Akkumulators an Bord eines Fahrzeugs positioniert ist und
- jeweils einen Nebel-Erzeuger (61, 62) und einen Flammen-Erzeuger (62, 63) umfasst,
wobei der Nebel-Erzeuger (61, 62) der oder einer Akkumulator-Attrappe (15) dazu ausgestaltet ist, dergestalt Nebel (64) zu erzeugen, dass der erzeugte Nebel (64) aus der Akkumulator-Attrappe (15) austritt,
wobei der Flammen-Erzeuger (62, 63) der oder einer Akkumulator-Attrappe (15) dazu ausgestaltet ist, dergestalt Flammen (65, 66) zu erzeugen, dass die erzeugten Flammen (65, 66) aus der Akkumulator-Attrappe (15) austreten,
wobei die oder jede Reifen-Attrappe (8.l1, 8.l2, 8.r1, 8.r2)
- an Bord der Fahrzeug-Attrappe (1) an einer möglichen Position eines Reifens an einem Fahrzeug positioniert ist und
- jeweils einen Flammen-Erzeuger umfasst, und
wobei der Flammen-Erzeuger der oder einer Reifen-Attrappe (8.l1, 8.l2, 8.r1, 8.r2) dazu ausgestaltet ist, dergestalt Flammen zu erzeugen, dass die erzeugten Flammen aus der Reifen-Attrappe (8.11, 8.12, 8.r1, 8.r2) austreten.

2. Brandübungsanlage (100) nach Anspruch 1,
**dadurch gekennzeichnet, dass**
die Fahrzeug-Attrappe (1) mindestens einen Sitzes (19.1, 19.r) oder eine Sitzbank (18) für mindestens einen Fahrzeuginsassen aufweist,
wobei die oder mindestens eine Akkumulator-Attrappe (15) unterhalb dieses Sitzes (19.1, 19.r) oder dieser Sitzbank (18) angeordnet ist.

3. Brandübungsanlage (100) nach einem der vorhergehenden Ansprüche, **dadurch gekennzeichnet, dass**
die Fahrzeug-Attrappe (1)
- einen Tank für eine brennbare Flüssigkeit, insbesondere einen Tank für Kraftstoff, und
- einen Verschluss
umfasst,
wobei der Verschluss den Tank wahlweise zu verschließen oder freizugeben vermag.

4. Brandübungsanlage (100) nach einem der vorhergehenden Ansprüche, **dadurch gekennzeichnet, dass**
die Brandübungsanlage (100) ein signalverarbeitendes Steuergerät (12) umfasst,
wobei das Steuergerät (12) dazu ausgestaltet ist, die oder mindestens eine, bevorzugt jede Akkumulator-Attrappe (15) so anzusteuern, dass
- zunächst der Nebel-Erzeuger (61, 62) der angesteuerten Akkumulator-Attrappe (15) damit beginnt, Nebel auszustoßen, und
- anschließend der Flammen-Erzeuger (62, 63) der angesteuerten Akkumulator-Attrappe (15) damit beginnt, Flammen auszustoßen.

5. Brandübungsanlage (100) nach einem der vorhergehenden Ansprüche, **dadurch gekennzeichnet, dass**
der Nebel-Erzeuger der oder mindestens einer Akkumulator-Attrappe (15) jeweils
- eine Nebelmaschine und / oder
- einen Rauchtopf oder Nebeltopf (61) und / oder
- einen Pyrotechnik-Bestandteil (62)
umfasst.

6. Brandübungsanlage (100) nach einem der vorhergehenden Ansprüche, **dadurch gekennzeichnet, dass**
der Flammen-Erzeuger (62, 63) der oder mindestens einer Akkumulator-Attrappe (15) jeweils
- einen Pyrotechnik-Bestandteil (62) und
- einen Brenner (63) zum Verbrennen eines brennbaren Fluids umfasst und
die Brandübungsanlage (100) ein signalverarbeitendes Steuergerät (12) umfasst,
wobei das Steuergerät (12) dazu ausgestaltet ist, die oder mindestens eine, bevorzugt jede Akkumulator-Attrappe (15) so anzusteuern, dass
- zunächst der Pyrotechnik-Bestandteil (62) aktiviert wird und damit beginnt, Flammen (65) zu erzeugen, und
- anschließend der Brenner (63) aktiviert wird und ein brennbares Fluid entzündet.

7. Brandübungsanlage (100) nach einem der vorhergehenden Ansprüche, **dadurch gekennzeichnet, dass**
die Brandübungsanlage (100) ein signalverarbeitendes Steuergerät (12) umfasst, wobei das Steuergerät (12) dazu ausgestaltet ist,
- zunächst die oder mindestens eine Reifen-Attrappe (8.11, 8.l2, 8.r1, 8.r2) so anzusteuern, dass der Flammen-Erzeuger der angesteuerten Reifen-Attrappe (8.11, 8.l2, 8.r1, 8.r2) damit beginnt, Flammen zu erzeugen, und
- anschließend die oder mindestens eine Akkumulator-Attrappe (15) so anzusteuern, dass
der Nebel-Erzeuger (61, 62) der angesteuerten Akkumulator-Attrappe (15) damit beginnt, Nebel auszustoßen, und / oder
der Flammen-Erzeuger (62, 63) der angesteuerten Akkumulator-Attrappe (15) damit beginnt, Flammen auszustoßen.

8. Brandübungsanlage (100) nach einem der vorhergehenden Ansprüche, **dadurch gekennzeichnet, dass**
die oder jede Akkumulator-Attrappe (15) ein Blech (67) aus einem metallischen Werkstoff umfasst,
wobei dieses Blech (67)
- einen Bereich der äußeren Oberfläche der Akkumulator-Attrappe (15) bildet und
- lösbar an dem Rest der Akkumulator-Attrappe (15) befestigt ist.

9. Brandübungsanlage (100) nach einem der vorhergehenden Ansprüche, **dadurch gekennzeichnet, dass**
die Brandübungsanlage (100) eine Attrappe (2) einer Ladesäule umfasst, wobei die Ladesäulen-Attrappe (2) eine Attrappe eines Kabels umfasst und
wobei die Kabel-Attrappe mit der Fahrzeug-Attrappe (1) verbunden oder verbindbar ist.

10. Brandübungsanlage (100) nach Anspruch 9,
**dadurch gekennzeichnet, dass**
die Fahrzeug-Attrappe (1) eine Kabel-Aufnahme für die Kabel-Attrappe umfasst, wobei die Kabel-Attrappe sich in die Kabel-Aufnahme einstecken lässt und wobei bevorzugt die Kabel-Attrappe in der Kabel-Aufnahme arretierbar ist.

11. Brandübungsanlage (100) nach einem der vorhergehenden Ansprüche, **dadurch gekennzeichnet, dass**
die Brandübungsanlage (100) eine Garage (3) umfasst,
wobei die Garage (3) so dimensioniert ist, dass sie die Fahrzeug-Attrappe (1) aufzunehmen und die aufgenommene Fahrzeug-Attrappe (1) zu umgeben vermag.

12. Brandübungsanlage (100) nach Anspruch 11,
**dadurch gekennzeichnet, dass**
die Fahrzeug-Attrappe (1) wahlweise im Inneren der Garage (3) oder außerhalb der Garage (3) positionierbar ist.

## Claims

1. Fire-fighting training device (100) comprising a dummy (1) of a vehicle, in particular of a road vehicle,
wherein the dummy vehicle (1) has the external dimensions of a vehicle, and comprises
- at least one dummy (15) of a battery for a vehicle, and
- at least one dummy (8.11, 8.l2, 8.r1, 8.r2) of a tire of a vehicle,
wherein the or each dummy battery (15)
- is positioned on board the dummy vehicle (1) at a possible position of a battery on board a vehicle, and
- in each case comprises a smoke generator (61, 62) and a flame generator (62, 63),
wherein the smoke generator (61, 62) of the or a dummy battery (15) is designed to generate smoke (64) in such a way that the generated smoke (64) emerges from the dummy battery (15),
wherein the flame generator (62, 63) of the or a dummy battery (15) is designed to generate flames (65, 66) in such a way that the generated flames (65, 66) emerge from the dummy battery (15),
wherein the or each dummy tire (8.11, 8.l2, 8.r1, 8.r2)
- is positioned on board the dummy vehicle (1) at a possible position of a tire on a vehicle, and
- each comprises a flame generator, and
wherein the flame generator of the or a dummy tire (8.11, 8.l2, 8.r1, 8.r2) is designed to generate flames in such a way that the generated flames emerge from the dummy tire (8.11, 8.l2, 8.r1, 8.r2).

2. Fire-fighting training device (100) according to claim 1,
**characterized in that**
the dummy vehicle (1) comprises at least one seat (19.1, 19.r) or bench seat (18) for at least one vehicle occupant,
wherein the or at least one dummy battery (15) is arranged below this seat (19.1, 19.r) or this bench seat (18).

3. Fire-fighting training device (100) according to any of the preceding claims,
**characterized in that**
the dummy vehicle (1) comprises
- a tank for a combustible liquid, in particular a tank for fuel, and
- a cap,
wherein the cap is capable of either closing or opening the tank.

4. Fire-fighting training device (100) according to any of the preceding claims,
**characterized in that**
the fire-fighting training device (100) comprises a signal-processing control unit (12),
wherein the control unit (12) is designed to actuate the or at least one, preferably each, dummy battery (15) in such a way that
- firstly, the smoke generator (61, 62) of the actuated dummy battery (15) begins to emit smoke, and
- subsequently, the flame generator (62, 63) of the actuated dummy battery (15) begins to emit flames.

5. Fire-fighting training device (100) according to any of the preceding claims,
**characterized in that**
the smoke generator of the or at least one dummy battery (15) in each case comprises
- a smoke machine and/or
- a fume pot or smoke pot (61), and/or
- a pyrotechnic component (62).

6. Fire-fighting training device (100) according to any of the preceding claims,
**characterized in that**
the flame generator (62, 63) of the or at least one dummy battery (15) in each case comprises
- a pyrotechnic component (62) and
- a burner (63) for burning a combustible fluid
and
the fire-fighting training device (100) comprises a signal-processing control unit (12),
wherein the control unit (12) is designed to actuate the or at least one, preferably each, dummy battery (15) in such a way that
- firstly, the pyrotechnic component (62) is activated and thus begins to generate flames (65), and
- subsequently, the burner (63) is activated and ignites a combustible fluid.

7. Fire-fighting training device (100) according to any of the preceding claims,
**characterized in that**
the fire-fighting training device (100) comprises a signal-processing control unit (12),
wherein the control unit (12) is designed
- to firstly actuate the or at least one dummy tire (8.l1, 8.l2, 8.r1, 8.r2) in such a way that the flame generator of the actuated dummy tire (8.11, 8.l2, 8.r1, 8.r2) thus begins to generate flames, and
- to subsequently actuate the or at least one dummy battery (15) in such a way that
the smoke generator (61, 62) of the actuated dummy battery (15) thus begins to emit smoke, and/or
the flame generator (62, 63) of the actuated dummy battery (15) thus begins to emit flames.

8. Fire-fighting training device (100) according to any of the preceding claims,
**characterized in that**
the or each dummy battery (15) comprises a sheet (67) made of a metal material,
wherein this sheet (67)
- forms a region of the outer surface of the dummy battery (15), and
- is detachably fastened to the rest of the dummy battery (15).

9. Fire-fighting training device (100) according to any of the preceding claims,
**characterized in that**
the fire-fighting training device (100) comprises a dummy (2) of a charging column,
wherein the dummy charging column (2) comprises a dummy of a cable, and
wherein the dummy cable is connected or connectable to the dummy vehicle (1).

10. Fire-fighting training device (100) according to claim 9,
**characterized in that**
the dummy vehicle (1) comprises a cable holder for the dummy cable,
wherein the dummy cable can be inserted into the cable holder, and
wherein the dummy cable can preferably be locked in the cable holder.

11. Fire-fighting training device (100) according to any of the preceding claims,
**characterized in that**
the fire-fighting training device (100) comprises a garage (3),
wherein the garage (3) is dimensioned such that it is capable of accommodating the dummy vehicle (1) and of surrounding the accommodated dummy vehicle (1).

12. Fire-fighting training device (100) according to claim 11,
**characterized in that**
the dummy vehicle (1) can be positioned either inside the garage (3) or outside the garage (3).

## Revendications

1. Installation d'exercice incendie (100) comprenant une maquette (1) d'un véhicule, en particulier d'un véhicule routier,
dans laquelle la maquette de véhicule (1) présente les dimensions externes d'un véhicule et comprend
- au moins une maquette (15) d'une batterie pour un véhicule et
- au moins une maquette (8.11, 8.l2, 8.r1, 8.r2) d'un pneu d'un véhicule,
la maquette de batterie ou chaque maquette de batterie (15)
- étant positionnée à bord de la maquette de véhicule (1) en une position possible d'une batterie à bord d'un véhicule et
- comprenant respectivement un générateur de brume (61, 62) et un générateur de flammes (62, 63),
le générateur de brume (61, 62) de la maquette de batterie ou d'une maquette de batterie (15) étant conçu pour générer de la brume (64) de manière telle que la brume (64) générée sort de la maquette de batterie (15),
le générateur de flammes (62, 63) de la maquette de batterie ou d'une maquette de batterie (15) étant conçu pour générer des flammes (65, 66) de manière telle que les flammes (65, 66) générées sortent de la maquette de batterie (15),
la maquette de pneu ou chaque maquette de pneu (8.11, 8.l2, 8.r1, 8.r2)
- étant positionnée à bord de la maquette de véhicule (1) en une position possible d'un pneu sur un véhicule et
- comprenant respectivement un générateur de flammes, et
le générateur de flammes de la maquette de pneu ou d'une maquette de pneu (8.11, 8.l2, 8.r1, 8.r2) étant conçu pour générer des flammes de manière telle que les flammes générées sortent de la maquette de pneu (8.11, 8.l2, 8.r1, 8.r2).

2. Installation d'exercice incendie (100) selon la revendication 1,
**caractérisée en ce que**
la maquette de véhicule (1) présente au moins un siège (19.1, 19.r) ou une banquette (18) pour au moins un occupant du véhicule,
la maquette de batterie ou au moins une maquette de batterie (15) étant disposée sous ledit siège (19.1, 19.r) ou ladite banquette (18).

3. Installation d'exercice incendie (100) selon l'une des revendications précédentes,
**caractérisée en ce que**
la maquette de véhicule (1) comprend
- un réservoir pour un liquide inflammable, en particulier un réservoir pour du carburant, et
- un bouchon,
le bouchon permettant, au choix, de fermer ou de libérer le réservoir.

4. Installation d'exercice incendie (100) selon l'une des revendications précédentes,
**caractérisée en ce que**
l'installation d'exercice incendie (100) comprend un appareil de commande (12) de traitement de signaux,
l'appareil de commande (12) étant configuré pour commander la maquette de batterie ou au moins une maquette de batterie, de préférence chaque maquette de batterie (15), de sorte que
- le générateur de brume (61, 62) de la maquette de batterie (15) commandée commence d'abord à dégager de la brume, et
- ensuite, le générateur de flammes (62, 63) de la maquette de batterie (15) commandée commence à dégager des flammes.

5. Installation d'exercice incendie (100) selon l'une des revendications précédentes,
**caractérisée en ce que**
le générateur de brume de la maquette de batterie ou d'au moins une maquette de batterie (15) comprend respectivement
- une machine à brume et/ou
- un bac à fumée ou un bac à brume (61) et/ou
- un composant pyrotechnique (62).

6. Installation d'exercice incendie (100) selon l'une des revendications précédentes,
**caractérisée en ce que**
le générateur de flammes (62, 63) de la maquette de batterie ou d'au moins une maquette de batterie (15) comprend respectivement
- un composant pyrotechnique (62) et
- un brûleur (63) pour la combustion d'un fluide inflammable
et
l'installation d'exercice incendie (100) comprend un appareil de commande (12) de traitement de signaux,
l'appareil de commande (12) étant configuré pour commander la maquette de batterie ou au moins une maquette de batterie, de préférence chaque maquette de batterie (15), de sorte que
- le composant pyrotechnique (62) est d'abord activé et commence à générer des flammes (65), et
- le brûleur (63) est ensuite activé et enflamme un fluide inflammable.

7. Installation d'exercice incendie (100) selon l'une des revendications précédentes,
**caractérisée en ce que**
l'installation d'exercice incendie (100) comprend un appareil de commande (12) de traitement de signaux,
l'appareil de commande (12) étant configuré pour
- commander d'abord la maquette de pneu ou au moins une maquette de pneu (8.11, 8.l2, 8.r1, 8.r2) de sorte que le générateur de flammes de la maquette de pneu (8.11, 8.l2, 8.r1, 8.r2) commandée commence à générer des flammes, et
- ensuite commander la maquette de batterie ou au moins une maquette de batterie (15) de sorte que
le générateur de brume (61, 62) de la maquette de batterie (15) commandée commence à dégager de la brume, et/ou
le générateur de flammes (62, 63) de la maquette de batterie (15) commandée commence à dégager des flammes.

8. Installation d'exercice incendie (100) selon l'une des revendications précédentes,
**caractérisée en ce que**
la maquette de batterie ou chaque maquette de batterie (15) comprend une tôle (67) en un matériau métallique,
ladite tôle (67)
- formant une zone de la surface externe de la maquette de batterie (15) et
- étant fixée de manière amovible au reste de la maquette de batterie (15).

9. Installation d'exercice incendie (100) selon l'une des revendications précédentes,
**caractérisée en ce que**
l'installation d'exercice incendie (100) comprend une maquette (2) d'une borne de recharge,
la maquette de borne de recharge (2) comprenant une maquette d'un câble et
la maquette de câble étant ou pouvant être reliée à la maquette de véhicule (1).

10. Installation d'exercice incendie (100) selon la revendication 9,
**caractérisée en ce que**
la maquette de véhicule (1) comprend un réceptacle pour câble pour la maquette de câble,
la maquette de câble pouvant être insérée dans le réceptacle pour câble et
la maquette de câble pouvant de préférence être bloquée dans le réceptacle pour câble.

11. Installation d'exercice incendie (100) selon l'une des revendications précédentes,
**caractérisée en ce que**
l'installation d'exercice incendie (100) comprend un garage (3),
le garage (3) étant dimensionné de sorte qu'il peut recevoir la maquette de véhicule (1) et entourer la maquette de véhicule (1) reçue.

12. Installation d'exercice incendie (100) selon la revendication 11,
**caractérisée en ce que**
la maquette de véhicule (1) peut être positionnée au choix à l'intérieur du garage (3) ou à l'extérieur du garage (3).
